# EUROPÄISCHE PATENTSCHRIFT

(11) **EP 0 308 645 B1**
(45) Veröffentlichungstag und Bekanntmachung des Hinweises auf die Patenterteilung: **31.03.1993**
(21) Anmeldenummer: 88113226.0
(22) Anmeldetag: 16.08.1988
(51) Int. Cl.: A61C 7/00

(54) **Dehnschraube für Kieferdehnvorrichtungen**
Orthodontic expander
Vis d'extension pour le redressement des dents

(30) Priorität: 28.08.1987 DE 3728759
(43) Veröffentlichungstag der Anmeldung: 29.03.1989
(73) Patentinhaber: DENTAURUM J.P. WINKELSTROETER KG, 75228 Ispringen (DE)
(72) Erfinder: Binder, Friedrich, D-7531 Kieselbronn (DE); Gutscher, Harald, D-7132 Illingen (DE); Hess, Herbert, D-7536 Ispringen (DE); Röhlcke, Friedrich Wilhelm, D-7539 Bilfingen (DE)
(74) Vertreter: Hoeger, Stellrecht & Partner

(56) Entgegenhaltungen:
- DE-A- 698 507
- DE-A- 3 504 379
- FR-A- 2 524 796
- GB-A- 718 385
- US-A- 3 284 902

## Beschreibung

Die Erfindung betrifft eine Dehnschraube für Kieferdehnvorrichtungen mit einer Spindel, umfassend einen Spindelkopf und mindestens einen Gewindeabschnitt, mit zwei beiderseits des Spindelkopfs angeordneten und durch die Spindel relativ zueinander verstellbaren Dehnschraubenkörpern und mit mindestens einem sich in Verstellrichtung der Dehnschraubenkörper erstreckenden Führungselement, welches gemeinsam mit einem der Dehnschraubenkörper verschieblich ist.

Derartige Dehnschrauben sind beispielsweise aus dem deutschen Patent 698 507 bekannt. Das Führungselement ist hier als zylindrische Hülse ausgeführt, die einen zylindrischen Dehnschraubenkörper aufnimmt und führt.

Grundprinzip dieser und anderer bekannter Ausführungsformen von Dehnschrauben (vgl. z.B. GB-A 718 385) ist, daß sich die Führungselemente durch an deren Querschnitt angepaßte Durchbrüche in einem Dehnschraubenkörper oder umgekehrt erstrecken, so daß eine exakte Führung des Dehnschraubenkörpers an den Führungselementen gewährleistet ist.

Bei derartigen Dehnschrauben sind entweder die Führungselemente oder die Dehnschraubenkörper aufwendig und somit teuer herstellbare Bauteile.

Der Erfindung liegt daher die Aufgabe zugrunde, eine Dehnschraube der gattungsgemäßen Art derart zu verbessern, daß diese möglichst einfach und damit billig herzustellen ist.

Diese Aufgabe wird bei einer Dehnschraube der eingangs beschriebenen Art erfindungsgemäß dadurch gelöst, daß das Führungselement Schenkel aufweist, die sich seitlich zu dem jeweils anderen Dehnschraubenkörper im wesentlichen freiliegend und im wesentlichen im Bereich einer Längsmittelebene der Dehnschraubenkörper erstrecken.

Der Kern der vorliegenden Erfindung ist somit darin zu sehen, daß sich die Führungselemente nicht mehr durch deren Querschnitt exakt angepaßte Durchbrüche hindurch erstrecken oder eine Ausnehmung zur exakten Führung der Dehnschraubenkörper beinhalten, sondern daß die Führungselemente im wesentlichen freiliegend neben dem Dehnschraubenkörper angeordnet sind. Trotzdem wird bei dieser Anordnung eine ausreichende Verwindungssteifigkeit und Führungsstabilität nach dem Einbau in Kieferdehnplatten erreicht, da sich der Kunststoff beim Giessen an die jeweiligen Führungselemente anschmiegt und einen exakten, dem Querschnitt der Führungselemente entsprechenden Führungskanal bildet, in welchem dann das Führungselement verschieblich ist. Somit erspart man sich durch die konsequente Ausnutzung des beim Eingießen in die Führungsplatte sich bildenden Kanals für die im wesentlichen freiliegenden Führungselemente die aufwendige Fertigung von dem Querschnitt der Führungselemente entsprechenden Durchbrüchen in den Schraubenkörpern. Die Dehnschraubenkörper können damit sehr einfach und billig zu fertigende Formen aufweisen.

Mit der Anordnung der Führungselemente im Bereich einer Längsmittelebene der Dehnschraube wird zusätzlich eine geringe Bauhöhe der Dehnschraube erreicht.

Gleichzeitig ergibt sich bei einem derartigen Aufbau der erfindungsgemäßen Dehnschraube noch der zusätzliche Vorteil, daß dadurch auch die Montage der Dehnschraube wesentlich vereinfacht ist, da der schwierige Montageprozeß des Ineinandersteckens von passend gearbeiteten Führungen und Durchbrüchen entfällt, der bei der Fertigung der bisher bekannten Dehnschrauben sehr aufwendig ist.

Bei der bisher beschriebenen Ausführungsform wurde offengelassen, wie die Spindel aufgebaut ist. Beispielsweise wäre bei der vorstehend beschriebenen Ausführungsform auch eine einfache Spindel denkbar, bei deren Verstellen lediglich ein Dehnschraubenkörper verschoben wird und die sich an dem anderen Dehnschraubenkörper abstützt. Um jedoch eine größtmögliche Dehnung zu erreichen, ist es zweckmäßig, wenn die Spindel eine Doppelspindel mit beidseitig des Spindslkopfes angeordneten gegenläufigen Gewindeabschnitten ist und wenn jedem Gewindeabschnitt ein Dehnschraubenkörper zugeordnet ist, so daß bei einem Verdrehen der Doppelspindel sowohl eine Verstellung des einen wie auch des anderen Dehnschraubenkörpers relativ zum Spindelkopf erfolgt.

Die Dehnschraubenkörper können prinzipiell eine beliebige Form aufweisen, sie können zum Beispiel zylindrisch oder profiliert, d.h. auch mehrkantig, ausgeführt sein.

Bei den bisher beschriebenen Ausführungsbeispielen wurde davon ausgegangen, daß mindestens ein Führungselement erforderlich ist. Vor allem, um die Verwindungssteifigkeit und auch die Exaktheit der Parallelführung zu verbessern, ist es vorteilhaft, wenn mindestens zwei parallel zueinander ausgerichtete Führungselemente vorgesehen sind.

Ferner ist zu berücksichtigen, daß diese erfindungsgemäße Dehnschraube hinsichtlich ihrer Abmessungen nicht klein genug ausgebildet sein kann, da sie ohne große Behinderungen in die Kieferdehnplatte eingegossen werden soll.

Der sich beim Eingiessen in die Kieferdehnplatte bildende Führungskanal für die Führungselemente kann im Hinblick auf die Verwindungssteifigkeit der erfindungsgemässen Dehnschraube nicht ausreichend sein. Aus diesem Grund ist es vorteilhaft, wenn die Verwindungssteifigkeit und die Qualität der Parallelführung dadurch verbessert werden, daß zwei aneinander anliegende Führungselemente parallel zur Spindelachse vorgesehen sind, die zusätzlich zu dem für sie in der Kieferdehnplatte gebildeten Kanal noch dadurch, daß sie aneinander anliegen, zusätzlich die Verwindungssteifigkeit verbessern.

Damit die zwei aneinander anliegenden Führungselemente exakt aneinander geführt sind, ist vorgesehen, daß die Führungselemente mit Flachseiten aneinander anliegen, so daß Relativverschiebungen quer zu den Flachseiten keine Verminderung der Parallelführungsqualität und Verwindungssteifigkeit zur Folge haben.

Die Führungselemente können zum Beispiel im wesentlichen rund sein.

Eine weitere Verbesserung der Verwindungssteifigkeit und Parallelführungseigenschaften ist dadurch möglich, daß die Führungselemente einen eckigen Querschnitt aufweisen, wobei dieser Querschnitt vorzugsweise profiliert, zum Beispiel viereckig ist. Die durch den eckigen Querschnitt bedingten Längskanten verbessern die Verwindungssteifigkeit deshalb, weil sie ein Verdrehen der Führungselemente in dem für sie gebildeten Führungskanal unterbinden.

Schliesslich sind die Verwindungssteifigkeit und die Parallelführungseigenschaften noch weiter dadurch verbesserbar, daß die Führungselemente aus Flachmaterial hergestellt sind. Dieses Flachmaterial erstreckt sich dann vorzugsweise parallel zur Längsmittelebene der Dehnschraubenkörper.

Durch die Tatsache, daß mit der erfindungsgemässen Dehnschraube eine sehr grosse Dehnung der Kieferdehnplatten möglich ist, besteht das Problem, daß die Spindel überdreht wird und damit aus zumindest einem der Dehnschraubenkörper herausläuft. Aus diesem Grund ist zweckmässigerweise eine Dehnungsbegrenzung vorzusehen. Diese Dehnungsbegrenzung kann beispielsweise an der Spindel angeordnet sein und verhindern, daß diese aus den Dehnschraubenkörpern herausläuft. Da bei der erfindungsgemässen Lösung jedoch die Führungselemente im wesentlichen freiliegend angeordnet sind und vorteilhafterweise aneinanderanliegen, ist es wesentlich einfacher, wenn die Führungselemente mit einer Dehnungsbegrenzung versehen sind, da eine derartige Dehnungsbegrenzung wesentlich einfacher herstellbar ist als beispielsweise eine Sicherung der Spindel gegen ein vollständiges Herausdrehen aus dem Dehnschraubenkörper.

Eine besonders einfache Möglichkeit bei zwei aneinander anliegenden Führungselementen sieht vor, daß die Dehnungsbegrenzung eine in einem Führungselement angeordnete, in Längsrichtung abgeschlossene Längsnut und einen in dieser gleitenden und an dem jeweils anderen Führungselement gehaltenen Nocken umfasst. Zweckmässigerweise liegen die Führungselemente dicht aneinander an, um ein Eindringen von Kunststoff beim Eingiessen zu verhindern.

Zusätzlich zu den bei den bisher beschriebenen Ausführungsbeispielen bekannten Massnahmen ist bei möglichst vorteilhaften Einbaumassen eine bestmögliche Verwindungssteifigkeit und Parallelführung dadurch möglich, daß auf gegenüberliegenden Seiten der Dehnschraubenkörper Führungselemente angeordnet sind.

Diese Führungselemente können getrennt an den Dehnschraubenkörpern gehalten sein.

Noch vorteilhafter ist es jedoch, wenn die Führungselemente Schenkel eines U-förmigen Bügels sind. Dadurch wird erreicht, daß durch den Mittelsteg des U-förmigen Bügels die beiden Führungselemente auch noch relativ zueinander stabilisiert sind und damit eine noch bessere Verwindungssteifigkeit gewährleisten.

Weiterhin ermöglicht eine derartige Ausbildung der Führungselemente, daß der U-förmige Bügel mit seinem Mittelsteg an einer dem Spindelkopf abgewandten Frontseite eines Dehnschraubenkörpers gehalten ist. Diese Befestigung des U-förmigen Bügels ist sehr einfach und erlaubt vor allem eine einfache Herstellung der Dehnschraubenkörper, da diese zur Halterung der Führungselemente auf ihren anderen Längsseiten nicht bearbeitet werden müssen.

Unter einer derartigen Befestigung des Mittelstegs an der Frontseite des Dehnschraubenkörpers sollte jedoch nicht zwangsläufig eine feste Verbindung zwischen diesen beiden Teilen verstanden werden. Es ist vielmehr vorteilhafter, wenn der Mittelsteg in die Frontseite lose, beispielsweise in eine Nut an der Frontseite, eingesteckt ist. Dadurch wird eine zusätzlich verbesserte Verdrehsicherung des Dehnschraubenkörpers erreicht und ausserdem eine gute Abstützung desselben beim Aufdrehen der Dehnschraube an dem U-förmigen Bügel. Ferner hat diese Ausführung den grossen Vorteil, daß der U-förmige Bügel nicht mit einem aufwendigen Verfahren an dem Dehnschraubenkörper befestigt werden muss, da durch das Einbetten des Dehnschraubenkörpers mitsamt dem U-förmigen Bügel eine ausreichende feste Verbindung zwischen beiden Teilen gewährleistet ist. Noch vorteilhafter als ein Ausführungsbeispiel mit zwei Führungselementen, die einen U-förmigen Bügel bilden, ist es jedoch, wenn die Führungselemente aus zwei U-förmigen Bügeln mit entgegengesetzt zueinander gerichteten und aneinander anliegenden Schenkeln gebildet sind, von denen jeweils einer mit einem Dehnschraubenkörper verschieblich ist. Dadurch werden sämtliche vorteilhaften Eigenschaften, die im Zusammenhang mit den vorstehend erwähnten Ausführungsbeispielen erläutert wurden, in optimaler Weise erreicht.

Im Zusammenhang mit den beschriebenen Ausführungsbeispielen wurde nicht im einzelnen erläutert, ob und wie ein Zusammenwirken der mit dem einen Dehnschraubenkörper verschieblichen Führungselemente mit dem jeweils anderen Dehnschraubenkörper besteht.

Das einfachste Ausführungsbeispiel sieht vor, daß sich die Führungselemente längs des jeweils anderen Dehnschraubenkörpers berührungsfrei erstrecken, so daß zwischen diesen Teilen überhaupt kein Kontat stattfindet.

Es ist aber auch, ohne daß weitere fertigungstechnische Schwierigkeiten auftreten, möglich, daß die Führungselemente an dem jeweils anderen Dehnschraubenkörper anliegen.

In Abwandlung dieser beschriebenen Ausführungsbeispiele kann es jedoch vorgesehen sein, daß der jeweils andere Dehnschraubenkörper einen diesem zugewandten Längsseitenbereich des Führungselements umgreift. Eine derartige Ausbildung des Dehnschraubenkörpers ist denkbar, wenn eine zusätzliche Verdrehsicherung beispielsweise dann geschaffen werden soll, wenn die Führungselemente nicht durch einen Mittelsteg zu einem U-förmigen Bügel miteinander verbunden sind.

Schliesslich erlaubt die Tatsache, daß die Führungselemente im wesentlichen freiliegend in dem durchsichtigen Kunststoffmaterial der Kieferdehnplatte angeordnet sind, auch auf den Führungselementen einen Maßstab anzuordnen, so daß an diesem die relative eingestellte Dehnung abgelesen und kontrolliert werden kann.

Weitere Merkmale und Vorteile der vorliegenden Erfindung sind Gegenstand der nachfolgenden Beschreibung sowie der zeichnerischen Darstellung eines Ausführungsbeispiels. In der Zeichnung zeigen:
- Figur 1: eine Darstellung eines Einbaus eines ersten Ausführungsbeispiels;
- Figur 2: eine Explosionsdarstellung des ersten Ausführungsbeispiels;
- Figur 3: eine Schnitt längs der Linie 3-3 in Figur 1;
- Figur 4: eine Seitenansicht in Richtung des Pfeils A in Figur 1;
- Figur 5: eine Draufsicht auf ein zweites, verbessertes Ausführungsbeispiel;
- Figur 6: einen Schnitt längs der Linie 6-6 in Figur 5 und
- Figur 7: eine Ansicht in Richtung des Pfeils B in Figur 5.

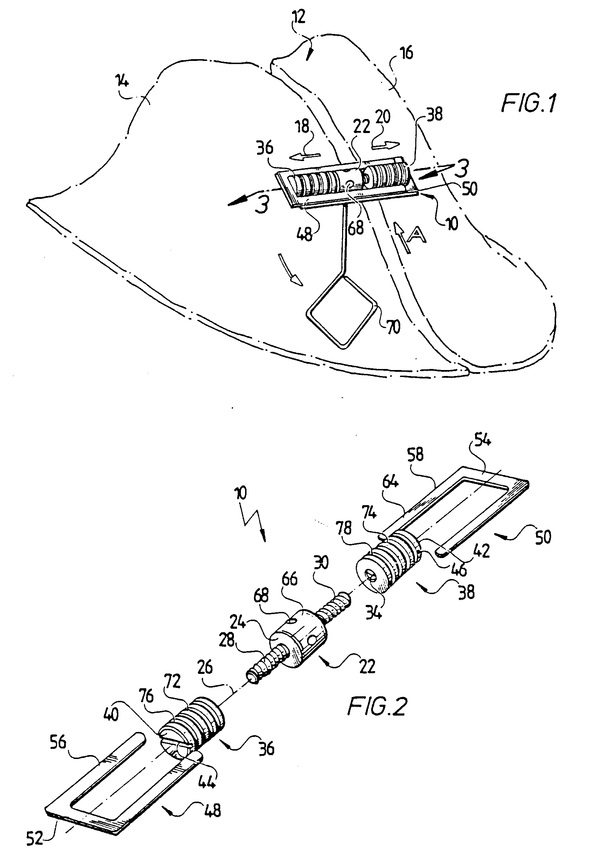

Die Figur 1 zeigt im einzelnen ein als Ganzes mit 10 bezeichnetes erstes Ausführungsbeispiel der erfindungsgemässen Dehnschraube, eingebaut in eine als Ganzes mit 12 bezeichnete Kieferdehnplatte, welche zwei Hälften 14 und 16 umfasst, die ihrerseits in Richtung der Pfeile 18 und 20 mittels der Dehnschraube 10 gegeneinander verschieblich sind.

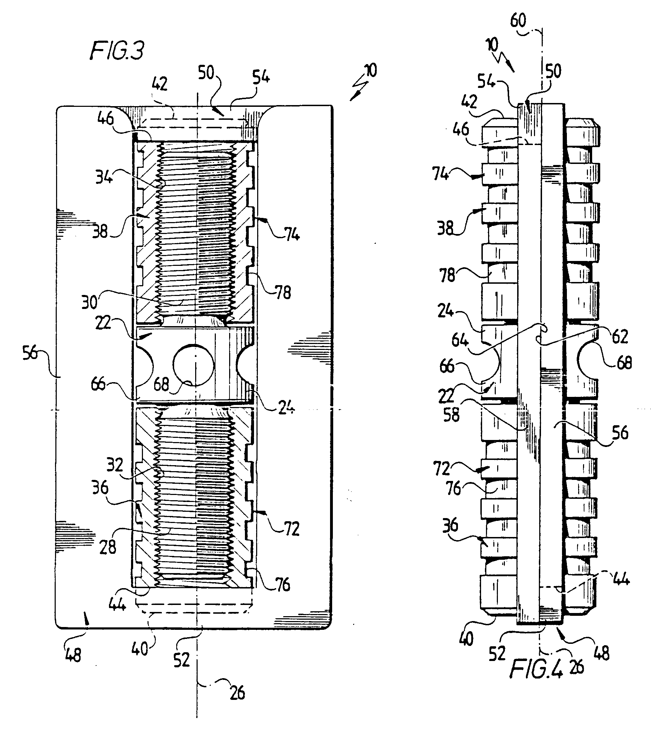

Die Dehnschraube 10 umfasst, wie in Figur 2 dargestellt, eine als Ganzes mit 22 bezeichnete Doppelspindel mit einem Spindelkopf 24 und mit beiderseits des Spindelkopfs 24 angeordneten und sich längs einer Drehachse 26 erstreckenden gegenläufigen Gewindeabschnitten 28 und 30. Diese Gewindeabschnitte 28 und 30 erstrecken sich, wie in Figur 3 dargestellt, in entsprechenden Gewindebohrungen 32 bzw. 34, welche in zylinderförmig ausgebildete und koaxial zur Drehachse 26 angeordneten Dehnschraubenkörpern 36, 38 eingearbeitet sind. Diese Dehnschraubenkörper 36, 38 sind auf ihren dem Spindelkopf 24 abgewandten Frontseiten 40 bzw. 42 jeweils mit einer Quernut 44 bzw. 46 versehen.

In diese Quernuten 44 bzw. 46 sind U-förmige Bügel 48 bzw. 50 mit ihren Mittelstegen 52 bzw. 54 so eingesetzt, daß deren U-Schenkel 56 bzw. 58 aufeinanderzu gerichtet und parallel zueinander verlaufen.Diese U-förmigen Bügel 48 bzw. 50 sind vorzugsweise aus einem Flachmaterial hergestellt, insbesondere gestanzt, und haben zweckmässigerweise einen rechteckigen Querschnitt.

Erfindungsgemäss sind diese U-förmigen Bügel 48 bzw. 50 so angeordnet, daß sie auf gegenüberliegenden Seiten einer durch die Drehachse 26 verlaufenden Längsmittelebene 60 liegen und jeweils eine Anlagefläche 62 bzw. 64 aufweisen, welche mit der Längsmittelebene 60 zusammenfällt. Somit sind die beiden U-förmigen Bügel 48 bzw. 50 mittels ihrer Anlageflächen 62 bzw. 64 aneinander geführt.

Die Dehnschraubenkörper 36 bzw. 38 bilden zusammen mit den U-förmigen Bügeln 48 bzw. 50 eine Einheit, welche im in die Hälften 16 bzw. 18 der Kieferdehnplatte 12 eingegossenen Zustand gemeinsam miteinander verschieblich sind. Die Verschiebung der Dehnschraubenkörper 36 bzw. 38 relativ zueinander erfolgt durch Drehen des Spindelkopfes 24, welcher hierzu in seiner Mantelfläche 66 mit radial zur Drehachse 26 verlaufenden durchgehenden Bohrungen 68 versehen ist. In diese Bohrungen 68 ist, wie in Figur 1 dargestellt, ein Steckschlüssel 70 einführbar.

Zur besseren Verankerung der Dehnschraubenkörper 36 in den eingegossenen Hälften 16 bzw. 18 tragen deren Zylinderflächen 72 bzw. 74 sog. Retentionen 76 bzw. 78, welche, wie in dem gezeichneten Ausführungsbeispiel dargestellt, beispielsweise Ringwülste sind. Selbstverständlich sind jedoch aber auch alle anderen Ausführungsformen von Retentionen in Form von Noppen, Rändelungen, Riffelungen oder ähnlichem denkbar.

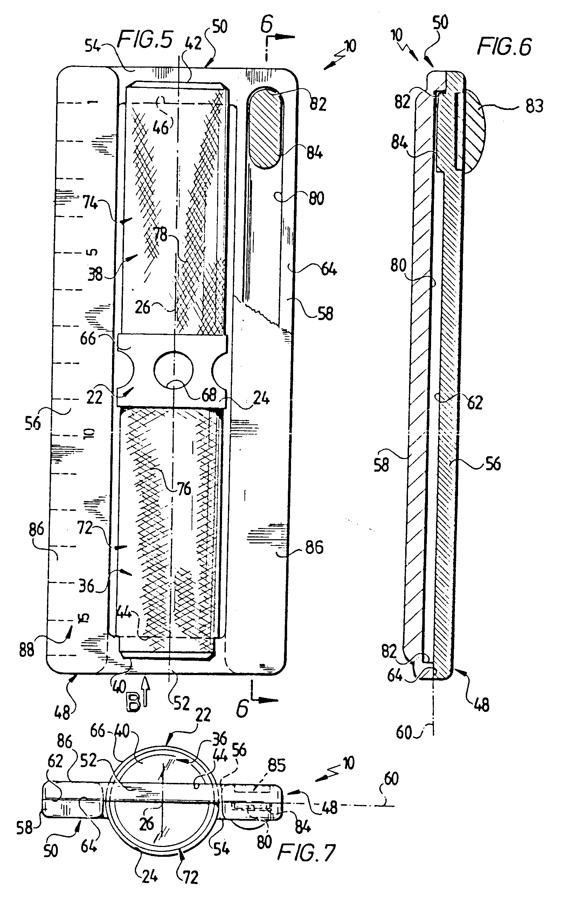

Um zu verhindern, daß die Dehnschraube 10 durch Drehen der Doppelspindel 22 zu weit aufgedreht wird und folglich die Gewindeabschnitte 28 bzw. 30 aus den Gewindebohrungen 32 bzw. 34 herauslaufen, sind die U-förmigen Bügel 48 bzw. 50 mit einer Dehnungsbegrenzung, dargestellt anhand eines mit dem ersten Ausführungsbeispiels ansonsten identischen zweiten Ausführungsbeispiel in den Figuren 5 bis 7, versehen. Hierzu ist in die Anlagefläche 64 des Bügels 50 eine sich längs des einen Schenkels 58 erstreckende Längsnut 80 eingearbeitet, welche vor einem jeweiligen Ende des Schenkels 58 jeweils einen Abschluss 82 aufweist. In diese Längsnut 80 greift ein sich von der Anlagefläche 62 im Bereich eines vorderen Endes des Schenkels 56 des U-förmigen Bügels 48 angeordneter Nocken 84 ein, der beispielsweise, wie in Figur 6 dargestellt, durch eine Ausprägung im Schenkel 56 herstellbar ist. Zum Einbau ist allerdings die in der Oberfläche 86 entstehende Vertiefung 85 mit einer Wachskappe 83 zu verschließen. Die beiden Bügel 48 bzw. 50 sind nun durch Verdrehung der Doppelspindel 22 so lange gegeneinander verschiebbar, bis der Nocken 84 gegen den am vorderen Ende des Schenkels 58 angeordneten Abschluß 82 der Längsnut 80 läuft und damit eine weitere Relativverschiebung der beiden Bügel 48 bzw. 50 zueinander unterbindet.

Eine derartige Dehnungsbegrenzung kann der Einfachheit halber lediglich in zwei gegeneinander anliegenden Schenkeln 56 bzw. 58 der U-förmigen Bügel vorgesehen sein. Es ist jedoch aus Symmetriegründen vorteilhafter, wenn in beiden Schenkeln 56 bzw. 58 eine derartige Dehnungsbegrenzung angeordnet ist.

Ferner zeigt die Fig. 5 einen erfindungsgemäss auf einer Anlagefläche 62 des Schenkels 56 angeordneten Maßstab 88, welcher beim Einbau der Dehnschraube 10 gemäß Fig. 1 durch den transparenten Kunststoff der Kieferdehnplatte 12 hindurch dann sichtbar ist, wenn der jeweils nicht mit dem Maßstab versehene Schenkel 58 gegenüber dem Schenkel 56 verschoben ist, und die Möglichkeit schafft, die eingestellte Relativverschiebung der beiden Hälften 14 und 16 messen und kontrollieren zu können.

Erfindungsgemäss wird die Dehnschraube wie beschrieben hergestellt und zum Einbau in einem zeichnerisch nicht dargestellten Dehnschraubenhalter eingesetzt, welcher während des Eingießens die Führungselemente 56, 58 parallel zur Spindel 22 ausgerichtet hält.

## Patentansprüche

1. Dehnschraube für Kieferdehnvorrichtungen mit einer Spindel, umfassend einen Spindelkopf (24) und mindestens einen Gewindeabschnitt (28, 30), mit zwei beiderseits des Spindelkopfs angeordneten und durch die Spindel relativ zueinander verstellbaren Dehnschraubenkörpern (36, 38) und mit mindestens einem sich in Verstellrichtung der Dehnschraubenkörper erstreckenden Führungselement (48), welches gemeinsam mit dem einen der Dehnschraubenkörper verschieblich ist, dadurch gekennzeichnet, daß das Führungselement (48) Schenkel (56) aufweist, die sich seitlich zu dem anderen Dehnschraubenkörper im wesentlichen freiliegend und im wesentlichen im Bereich einer Längsmittelebene der Dehnschraubenkörper erstrecken.

2. Dehnschraube nach Anspruch 1, dadurch gekennzeichnet, daß die Spindel eine Doppelspindel (22) mit beiseitig des Spindelkopfs (24) angeordneten gegenläufigen Gewindeabschnitten (28, 30) ist und daß jedem Gewindeabschnitt (28, 30) ein Dehnschraubenkörper (36, 38) zugeordnet ist.

3. Dehnschraube nach Anspruch 1 oder 2, dadurch gekennzeichnet, daß mindestens zwei parallel zueinander ausgerichtete Führungselemente (56, 58) vorgesehen sind.

4. Dehnschraube nach einem der voranstehenden Ansprüche, dadurch gekennzeichnet, daß zwei aneinander anliegende Führungselemente (56, 58) vorgesehen sind.

5. Dehnschraube nach Anspruch 4, dadurch gekennzeichnet, daß die zwei Führungselemente (56, 58) mit Flachseiten (62, 64) aneinander anliegen.

6. Dehnschraube nach Anspruch 4 oder 5, dadurch gekennzeichnet, daß die Führungselemente (56, 58) einen eckigen Querschnitt aufweisen.

7. Dehnschraube nach Anspruch 6, dadurch gekennzeichnet, daß die Führungselemente (56, 58) aus Flachmaterial hergestellt sind.

8. Dehnschraube nach einem der voranstehenden Ansprüche, dadurch gekennzeichnet, daß die Führungselemente (56, 58) mit einer Dehnungsbegrenzung (80 bis 84) versehen sind.

9. Dehnschraube nach Anspruch 8, dadurch gekennzeichnet, daß die Dehnungsbegrenzung eine in einem Führungselement (58) angeordnete, in Längsrichtung abgeschlossene Längsnut (80) und einen in dieser gleitenden an dem jeweils anderen Führungselement (56) gehaltenen Nocken (84) umfaßt.

10. Dehnschraube nach einem der voranstehenden Ansprüche, dadurch gekennzeichnet, daß auf gegenüberliegenden Seiten der Dehnschraubenkörper (36, 38) Führungselemente (56, 58) angeordnet sind.

11. Dehnschraube nach Anspruch 10, dadurch gekennzeichnet, daß die Führungselemente Schenkel (56, 58) eines U-förmigen Bügels (48, 50) sind.

12. Dehnschraube nach Anspruch 11, dadurch gekennzeichnet, daß der U-förmige Bügel (48, 50) mit seinem Mittelsteg (52, 54) an einer dem Spindelkopf (24) abgewandten Frontseite (40, 42) eines Dehnschraubenkörpers (36, 38) gehalten ist.

13. Dehnschraube nach Anspruch 12, dadurch gekennzeichnet, daß der Mittelsteg (52, 54) in die Frontseite (40, 42) lose eingesteckt ist.

14. Dehnschraube nach einem der Ansprüche 11 bis 13, dadurch gekennzeichnet, daß die Führungselemente aus zwei U-förmigen Bügeln (48, 50) mit entgegengesetzt zueinander gerichteten und aneinander anliegenden Schenkeln (56, 58) gebildet sind, von denen jeweils einer (48, 50) mit jeweils einem Dehnschraubenkörper (36, 38) verschieblich ist.

15. Dehnschraube nach einem der voranstehenden Ansprüche, dadurch gekennzeichnet, daß die Führungselemente (56, 58) sich längs des jeweils anderen Dehnschraubenkörpers (38, 36) berührungsfrei erstrecken.

16. Dehnschraube nach einem der Ansprüche 1 bis 14, dadurch gekennzeichnet, daß die Führungselemente (56, 58) an dem jeweils anderen Dehnschraubenkörper (38, 36) anliegen.

17. Dehnschraube nach einem der Ansprüche 1 bis 14, dadurch gekennzeichnet, daß der jeweils andere Dehnschraubenkörper (38, 36) einen diesem zugewandten Längsseitenbereich des Führungselements (56, 58) umgreift.

18. Dehnschraube nach einem der voranstehenden Ansprüche, dadurch gekennzeichnet, daß mindestens eines der Führungselemente (56, 58) mit einem Maßstab (88) versehen ist.

## Claims

1. Expansion screw for jaw expanding devices with a spindle, comprising a spindle head (24) and at least one threaded section (28, 30) with two expansion screw elements (36, 38) placed on either side of the spindle head, and adjustable in relation to one another by means of the spindle, and with at least one guide element (48) running in the direction of adjustment of the expansion screw elements and movable together with one of the expansion screw elements, characterized in that the guide element (48) has legs (56), which run alongside the other expansion screw element, substantially exposed and substantially in the area of one longitudinal plane of the expansion screw elements.

2. Expansion screw according to Claim 1, characterized in that the spindle is a double spindle (22) with threaded sections (28, 30) running in opposite directions placed on either side of the spindle head (24), and that each threaded section (28, 30) is provided with an expansion screw element (36, 38).

3. Expansion screw according to Claim 1 or 2, characterized in that at least two guide elements (56, 58) are provided arranged parallel to one another.

4. Expansion screw according to one of the preceding Claims, characterized in that two guide elements are provided in contact with one another.

5. Expansion screw according to Claim 4, characterized in that the two guide elements (56, 58) contact one another with their flat sides (62, 64).

6. Expansion screw according to Claim 4 or 5, characterized in that the guide elements (56, 58) have a rectangular cross-section.

7. Expansion screw according to Claim 6, characterized in that the guide elements (56, 58) are made of flat material.

8. Expansion screw according to one of the preceding Claims, characterized in that the guide elements (56, 58) are provided with an expansion limiter (80 to 84).

9. Expansion screw according to Claim 8, characterized in that the expansion limiter comprises a longitudinal groove (80) situated in one guide element (58) and closed in the longitudinal direction, and a projection (84) on whichever is the other guide element sliding in the latter.

10. Expansion screw according to one of the preceding Claims, characterized in that guide elements (56, 58) are arranged on opposite sides of the expansion screw elements.

11. Expansion screw according to Claim 10, characterized in that the guide elements are legs (56, 58) of a U-shaped stirrup (48, 50).

12. Expansion screw according to Claim 11, characterized in that the U-shaped stirrup (48, 50) is held with its central cross-piece (52, 54) against a face (40, 42) of an expansion screw element (36, 38) away from the spindle head (24).

13. Expansion screw according to Claim 12, characterized in that the central cross-piece (52, 54) is loosely inserted in the face (40, 42).

14. Expansion screw according to Claims 11 to 13, characterized in that the guide elements consist of two U-shaped stirrups (48, 50) with legs (56, 58) running in opposite directions and in contact with one another, one of which (48, 50) in each case can be moved with one expansion screw element (36, 38).

15. Expansion screw according to one of the preceding Claims, characterized in that the guide elements (56, 58) extend alongside the expansion screw element (38, 36), which is a different one in each case, without touching it.

16. Expansion screw according to one of Claims 1 to 14, characterized in that the guide elements (56, 58) are in contact in each case with a different expansion screw element (38, 36).

17. Expansion screw according to one of Claims 1 to 14, characterized in that the expansion screw element (38, 36), which is a different one in each case, embraces a longitudinal side area of the guide element (56, 58) which faces it.

18. Expansion screw according to one of the preceding Claims, characterized in that at least one of the guide elements (56, 58) is provided with a scale (88).

## Revendications

1. Ecarteur à vis pour dispositifs d'agrandissement de maxillaire, comprenant une vis qui comprend elle-même une tête de vis (24) et au moins un segment fileté (28,30), deux corps d'écarteur disposés de part et d'autre de la tête de vis et qui peuvent être réglés l'un par rapport à l'autre par la vis, et au moins un élément de guidage (48) s'étendant dans la direction du réglage des corps d'écarteur et qui se déplace en translation conjointement avec un des corps d'écarteur, caractérisé en ce que l'élément de guidage (48) présente des branches (58) qui s'étendent latéralement à l'autre corps d'écarteur, sensiblement découverts et sensiblement dans la région d'un plan médian longitudinal des corps d'écarteur.

2. Ecarteur à vis selon la revendication 1, caractérisé en ce que la vis est une vis double (22) munie de segments filetés (28, 30) opposés, disposés de part et d'autre de la tête (24) de la vis, et en ce qu'à chaque segment fileté (28, 30), est associé un corps d'écarteur (36, 38).

3. Ecarteur à vis selon la revendication 1 ou 2, caractérisé en ce qu'il est prévu au moins deux éléments de guidage (56, 58) orientés parallèlement l'un à l'autre.

4. Ecarteur à vis selon une des revendications précédentes, caractérisé en ce qu'il est prévu deux éléments de guidage (56, 58) qui sont en appui l'un contre l'autre.

5. Ecarteur à vis selon la revendication 4, caractérisé en ce que les deux éléments de guidage (56, 58) sont en appui l'un contre l'autre par des faces planes (62, 64).

6. Ecarteur à vis selon la revendication 4 ou 5, caractérisé en ce que les éléments de guidage (56, 58) présentent une section transversale anguleuse.

7. Ecarteur à vis selon la revendication 6, caractérisé en ce que les éléments de guidage (56, 58) sont fabriqués en une matière plate.

8. Ecarteur à Vis selon une des revendications précédentes, caractérisé en ce que les éléments de guidage (56, 58) sont munis d'un limiteur d'écartement (80 à 84).

9. Ecarteur à vis selon la revendication 8, caractérisé en ce que le limiteur d'écartement comprend une rainure longitudinale (80) prévue dans un élément de guidage (58), fermée dans la direction longitudinale, et un bossage (84) qui coulisse dans cette rainure et est porté par l'autre élément de guidage (56).

10. Ecarteur à vis selon une des revendications précédentes, caractérisé en ce que des éléments de guidage (56, 58) sont agencés sur les deux côtés opposés des corps d'écarteur (36, 38).

11. Ecarteur à vis selon la revendication 10, caractérisé en ce que les éléments de guidage sont les branches (56, 58) d'un étrier en forme de U (48, 50).

12. Ecarteur à vis selon la revendication 11, caractérisé en ce que l'étrier en forme de U (48, 50) est tenu par sa traverse centrale (52, 54) à la face frontale (40, 42) d'un corps d'écarteur (36, 38) qui est à l'opposé de la tête (24) de la vis.

13. Ecarteur à vis selon la revendication 12, caractérisé en ce que la traverse centrale (52, 54) est encastrée avec jeu dans la face frontale (40, 42).

14. Ecarteur à vis selon une des revendications 11 à 13, caractérisé en ce que les éléments de guidage sont constitués par deux étriers en forme de U (48, 50) possédant des branches (56, 58) orientées les unes en sens inverse des autres et en appui les unes contre les autres, dont chacun (48, 50) peut se déplacer en translation conjointement avec un corps d'écarteur (36, 38).

15. Ecarteur à vis selon une des revendications précédentes, caractérisé en ce que les éléments de guidage (56, 58) s'étendent chacun le long de l'autre corps d'écarteur (36, 38) sans entrer en contact avec celui-ci.

16. Ecarteur à vis selon une des revendications 1 à 14, caractérisé en ce que les éléments de guidage (56, 58) sont en appui chacun contre l'autre corps d'écarteur (36, 38).

17. Ecarteur à vis selon une des revendications 1 à 14, caractérisé en ce que l'autre corps d'écarteur (36, 38) encadre une région de bord longitudinal de l'élément de guidage (56, 58) dirigée vers ce corps.

18. Ecarteur à vis selon une des revendications précédentes, caractérisé en ce qu'au moins un des éléments de guidage (56, 58) est muni d'une échelle graduée (88).
